# EUROPÄISCHE PATENTSCHRIFT

(11) **EP 0 632 322 B1**
(45) Veröffentlichungstag und Bekanntmachung des Hinweises auf die Patenterteilung: **17.07.1996**
(21) Anmeldenummer: 94108185.3
(22) Anmeldetag: 27.05.1994
(51) Int. Cl.: G03C 3/00, B65D 85/67

(54) **Lichtdichte Verpackung von bahnförmigem lichtempfindlichem Material**
Lichtproof package of photosensitive strip material
Emballage étanche à la lumière pour produit photosensible en bande

(30) Priorität: 02.11.1993 DE 4337368; 05.06.1993 DE 4318790
(43) Veröffentlichungstag der Anmeldung: 04.01.1995
(73) Patentinhaber: DU PONT DE NEMOURS (DEUTSCHLAND) GMBH, D-61343 Bad Homburg v.d.H. (DE); E.I. DU PONT DE NEMOURS AND COMPANY, Wilmington Delaware 19898 (US)
(72) Erfinder: Rasel, Heinz, D-63263 Neu-Isenburg (DE)
(74) Vertreter: Pistor, Wolfgang

(56) Entgegenhaltungen:
- EP-A- 0 414 265
- EP-A- 0 537 777
- DE-U- 9 304 380
- FR-A- 2 094 839
- US-A- 2 797 804
- US-A- 4 148 395
- US-A- 4 455 076
- US-A- 4 505 387

## Beschreibung

Die Erfindung bezieht sich auf eine Verpackung für bahnförmiges lichtempfindliches Material, insbesondere photographisches Filmmaterial. Diese Verpackungen sichern die Gebrauchsfähigkeit des lichtempfindlichen Materials bis zur Verwendung. Sie schützen das Filmmaterial vor ungewollter Belichtung und vor Feuchtigkeit.

Eine gebräuchliche Verpackungsform ist die sogenannte Wickelrolle, bei der das Filmmaterial um eine Wickelhülse gewickelt ist und lichtdicht durch eine Abdeckfolie und zwei Seitenteile geschützt ist. Erfolgreich am Markt eingeführt sind sogenannte Tageslichtverpackungen, die einen Filmwechsel im Hellen erlauben. Dabei wird die Wickelrolle meist auf zwei Aufnahmedorne eines Verarbeitungsgerätes gespannt, die Abdeckfolie teilweise abgewickelt und durch einen lichtdichten Schlitz geführt. Anschließend wird der Deckel der Aufnahmevorrichtung geschlossen. Die Aufnahmevorrichtung kann fester Bestandteil des Gerätes oder eine Kassette sein. Ein weiteres Ziehen an der Abdeckfolie bewirkt, daß Filmmaterial aus dem Schlitz austritt. Meist wird die Abdeckfolie nun vom Film getrennt und verworfen. Der Fördermechanismus erfaßt den Filmanfang und transportiert Filmmaterial in den Belichtungsbereich des Verarbeitungsgerätes. Das Gerät ist betriebsbereit. Der Filmwechsel erfordert keine Dunkelkammer.

Eine tageslichtverpackte Filmrolle ist beispielsweise aus US 4 148 395 bekannt. Sie besteht im wesentlichen aus einer Abdeckfolie und zwei scheibenförmigen Seitenteilen. Letztere weisen an der Peripherie zungenförmige Abschnitte auf, die auf die Mantelfläche des Zylinders umgeklappt und mit dieser verklebt werden. Im Innenbereich kleben die Seitenteile an der Stirnfläche der Wickelhülse. Es hat sich aber gezeigt, daß diese Verpackung unter bestimmten Bedingungen nicht lichtdicht ist. Zum einen entsteht durch das Umklappen eine unregelmäßige Faltenbildung mit Hohlräumen, und als Folge Belichtung im Außenbereich des Filmwickels. Oft erweist sich schon bei geringen mechanischen Beanspruchungen daß die Klebefläche an der Stirnfläche der Wickelhülse ungenügend ist. Es kommt zur ungewollten Belichtung des Filmmaterials im Innenbereich des Filmwickels.

Aus US 4 505 387 ist ebenfalls eine Tageslichtverpackung für Filmrollen bekannt, bei der eine gegenüber der Filmbahn breitere Abdeckfolie Einschnitte aufweist und teilweise um die Stirnflächen gefaltet ist. Auch hier wird der Innenbereich der Seitenteile mit der Stirnfläche der Wickelhülse verklebt und es kann zur unbeabsichtigten Belichtung des Filmmaterials kommen. Außerdem verbreitern die Falten die axiale Abmessung der Wickelrolle, was oft unerwünscht ist.

In EP 0 350 093 ist eine lichtdichte Verpackung für bahnförmiges Filmmaterial beschrieben, bei der eine Verpackungsfolie sowohl die Mantel- als auch die Stirnflächen eines Filmwickels umhüllt. Die überstehenden Ränder sind in die Wickelhülse eingeschlagen und dort lichtdicht versiegelt. Letzteres macht die Verpackung aufwendig und kann - sofern die Versiegelung durch einen Heißdorn erfolgt - zur Beschädigung des wärmeempfindlichen photographischen Materials führen.

Auch bei der in EP 0 414 265 beschriebenen Verpackung werden die die Breite der Filmbahn überragenden Teile der Abdeckfolie in die Wickelhülse gestülpt und durch einen Steckkern befestigt. Die regellos gefaltete Abdeckfolie und der Steckkern verändern die, bei bestimmten Verarbeitungsgeräten und Filmformaten maßgeblichen, äußeren Abmessungen der Wickelrolle erheblich.

Aus EP 0 488 738, EP 0 536 608 und US 4 455 076 sind Verpackungen bekannt, bei denen starrwandige Bordscheiben die Seitenteile bilden und deren Peripherie die Abdeckfolie in Form einer Bördelung lichtdicht umschließt. Diese Bordscheiben bilden zwar zusätzlichen Schutz vor mechanischen Beschädigungen, vergrößern aber die axiale Länge des Filmwickels.

US 4 826 008 beschreibt eine Verpackung für Filmrollen bestehend aus einer starrwandigen Röhre und zwei in der Röhre und in der Wickelhülse steckende Endkappen. Axiale Länge und Außendurchmesser der Filmrolle werden durch die Verpackung erheblich vergrößert.

Eine Vergrößerung der Abmessungen des Filmwickels durch die Verpackung ist aber bei der Verwendung des Filmmaterials oft nicht zulässig. Bei vielen Verarbeitungsgeräten ist der axiale Abstand der Aufnahmedorne zwar einstellbar, so daß auch weniger breite Filmformate verarbeitet werden können, er ist aber für das größte Filmformat stets begrenzt. Oft überragt nur geringfügig die axiale Länge der Wickelrolle die zur Verfügung stehende lichte Breite des Einbauraums. Der Film ist wegen seiner Verpackung dann in diesem Gerät nicht verwendbar. Die für die Verpackungsabmessungen zulässigen Toleranzen können sehr eng bemessen sein. In manchen Fällen kann es vorkommen, daß die Wickelrolle eines Filmherstellers einmal in ein Verarbeitungsgerät paßt, ein anderes mal aber, u.U. bei einem Gerät gleichen Typs nicht geladen werden kann: Die für den Filmhersteller und für den Hersteller des Verarbeitungsgerätes maßgeblichen Toleranzfelder wurden zwar eingehalten, überlappen sich aber. Oft entscheiden nur Bruchteile eines Millimeters über die Verwendbarkeit der Filmrolle.

Seitens der Filmhersteller ist man bestrebt die Wickelrolle so zu bemessen, daß sie in möglichst viele Verarbeitungsgeräte, auch unterschiedlicher Firmen, paßt. M.a.W. der Filmhersteller muß die Verpackung seines Films auf die vom Gerätehersteller vorgesehene Entnahmevorrichtung anpassen. Dies bedeutet, daß die Verpackung so zu gestalten ist, daß sich die Abmessungen des Filmwickels, insbesondere seine axiale Länge und der Innendurchmesser der Wickelhülse, kaum verändern. Darüber hinaus ist man bestrebt die Einzelkomponenten einer Wickelrolle möglichst einheitlich zu gestalten, so daß sie von Verpackungsmaschinen automatisch leicht verarbeitet werden können.

Ferner soll nach der Verwendung des Films die Verpackung auf einfache Weise in ihre unterschiedlichen Materialien getrennt und einem Recycling-Verfahren zugeführt werden können.

Der Erfindung liegt die Aufgabe zugrunde, eine Verpackung für lichtempfindliches bahnfömiges Material anzugeben, bei der die Verpackung die axiale Länge und den Innendurchmesser des Filmwickels nicht wesentlich verändert.

Diese Aufgabe wird erfindungsgemäß durch die Merkmale des Anspruchs 1 gelöst. Aus den Unteransprüchen sind weitere vorteilhafte Merkmale entnehmbar.

Durch die Erfindung ist eine sehr platzsparende Verpackung möglich geworden welche das lichtempfindliche Material zuverlässig bis zur Verwendung schützt. Darüber hinaus ist der Verpackungsvorgang automatisierbar. Die Verpackung ist vergleichsweise zum Stand der Technik billig herstellbar. Der lichtdichte Abschluß der Eckverbindung der äußeren Zylindermantelfläche wird im wesentlichen durch eine elastische lichtundurchlässige Dichtscheibe erreicht, die ein Teil der Endkappe ist und mit der Abdeckfolie zusammenwirkt. Jede Endkappe hat radial außen und innen liegend je einen Ansatz. Der äußere Ansatz bildet eine Muffe für den Filmwickel und drückt die Peripherie der Dichtscheibe so gegen die Stirnfläche des Filmwickels, daß der Rand der Dichtscheibe die Stirnfläche umwölbt und lichtdicht abschließt. Die Innenfläche dieser Muffe ist mit einem Klebstoff beschichtet und haftet an der Abdeckfolie.

Der innere Ansatz der Endkappe ist nabenförmig, steckt in der Wickelhülse und bildet dort einen lichtdichten Abschluß. An dieser Stelle ist eine lichtdichte Versiegelung durch einen Klebstoff nicht erforderlich. Dies ist ein entscheidender Vorteil. Eine aufwendige Dosiervorrichtung, die präzise den Klebstoff so zuführen muß, daß das Filmmaterial nicht verunreinigt wird, wird hier nicht benötigt. Es ist auch von Vorteil, daß diese Verbindung nur durch Reibungskräfte aufrechterhalten wird und auch von Hand lösbar ist. Bestehen Endkappe und Wickelhülse beispielsweise aus unterschiedlichen Werkstoffen, so können diese Materialien einfach getrennt und recyclt werden.

Derartige Endkappen vereinfachen die Herstellung einer lichtdichten Wickelrolle erheblich. Die Endkappen können vorgefertigt werden. Da die Ansätze der Endkappen eine Formschräge aufweisen, können bei der Montage die Endkappen einfach auf den Filmwickel aufgesteckt werden. Ein Preßsitz verbindet den inneren Ansatz jeder Endkappe mit dem Filmwickel. Die klebrige Innenfläche des äußeren Ansatzes haftet nach einem Anpreßvorgang an der Abdeckfolie.

Es ist bevorzugt die Endkappen aus Kunststoff, beispielsweise durch Tiefziehen herzustellen. Die axiale Länge des Filmwickels vergrößert sich durch diese Verpackung nur um Bruchteile eines Millimeters. Die Endkappen können aber auch ein Preßteil aus Papier oder Pappe sein.

In einer bevorzugten Ausführungsform ist jede Endkappe aus drei Teilen zusammengesetzt. Ein scheibenförmiges flexibles Teil drückt die Dichtscheibe gegen die Stirnfläche des Filmwickels, so daß ein lichtdichter Abschluß entsteht. Das flexible Teil weist an der Peripherie Einschnitte auf. Durch Umklappen entsteht ein umkreisförmiger Bereich der eine mit der Abdeckfolie des Filmwickels fest verbundene Muffe darstellt. Der zur Wickelhülse hin liegende innere Bereich des flexiblen Teils ist an ein nabenförmiges Teil geklebt welches in der Wickelhülse steckt. Durch diesen Aufbau erreicht man eine noch platzsparendere Verpackung. Im Innenbereich, wo ein bestimmtes Maß an Formstabilität für die reibschlüssige Verbindung mit der Wickelhülse erforderlich ist, führt man das nabenförmige Teil der Endkappe etwas dickwandiger aus. Für die Stirnfläche und den umkreisförmigen Bereich der Endkappe, wo es in erster Linie auf eine lichtdichte Umhüllung ankommt, verwendet man einen biegsamen dünnwandigen Werkstoff. Vergleichsweise hierzu ist die Abdeckfolie reißfester ausgeführt. Die unterschidliche Reißfestigkeit dieser Teile ermöglicht eine einfache Ausführung der Verpackung als Tageslichtverpackung.

Für die Befestigung des nabenförmigen Teils ist hierbei vorteilhaft, wenn das nabenförmige Teil aus zwei Abschnitten gebildet wird: Der erste Abschnitt, ein buchsenförmiger Ansatz, stellt eine sichere und lichtdichte Verbindung mit der Wickelhülse her. Wenn die Wickelhülse ein Pappkern ist, ist hierbei vorteilhaft, wenn der Außendurchmesser des buchsenförmigen Ansatzes um 0,3 mm bis 0,5 mm größer als der Innendurchmesser der Wickelhülse ist. Es entsteht auch dann eine sichere Befestigung wenn der Innendurchmesser der Wickelhülse, beispielsweise aufgrund von Fertigungstoleranzen oder sich ändernder Luftfeuchtigkeit, schwankt. Der zweite Abschnitt des nabenförmigen Teils ist eine konisch zulaufende Wirkfläche. Sie erleichtert das Einstecken in die Wickelhülse. Eine axiale Länge des nabenförmigen Teils von etwa 35 mm hat sich für alle Filmformate als günstig erwiesen.

Es ist bevorzugt Dichtscheiben aus lichtundurchlässigem leicht biegsamem Material zu verwenden deren Außendurchmesser größer als der Außendurchmesser des Filmwickels ist. Wenn bei der Montage die Endkappe gegen die Stirnfläche des Filmwickels gepreßt wird, dann schmiegt sich der überstehende Bereich der Dichtscheibe an den äußeren Rand der Zylindermantelfläche. Es entsteht ein lichtdichter Abschluß. Die Dichtscheibe verhindert auch, daß Filmmaterial mit Klebstoff verunreinigt wird. Mit Vorteil verwendet man eine 0,05 mm bis 0,2 mm dicke, besonders bevorzugt eine 0,1 mm dicke schwarz pigmentierte elastische Folie.

Vorteilhaft ist hierbei wenn die Dichtscheibe den Filmwickel um 0,7 mm bis 2 mm überragt. Es treten dann im Bereich der Wölbung keine Falten auf.

Bevorzugterweise entspricht die Länge der Abdeckfolie etwa der 1,5-fachen Umfangslänge des Filmwickels und umhüllt dessen äußere Umfangsfläche. Das Endstück der Abdeckfolie ist mittig mit der Filmbahn verklebt. Das Anfangsstück der Abdeckfolie ist beispielsweise durch einen Klebstreifen an der äußeren Mantelfläche des Filmwickels befestigt. Wenn die Abdeckfolie breiter als die Filmbahn ist, verbessert sich die Lichtdichtigkeit der Verpackung.

Hierbei ist bevorzugt, wenn die Breite der Abdeckfolie um etwa 0,4 mm bis 0,5 mm größer als die Breite des Filmmaterials ist. Es schmiegt sich dann bei der Montage nicht nur die Peripherie der Dichtscheibe um den äußeren Zylinderrand, sondern auch der Rand der Abdeckfolie wölbt sich faltenfrei zur Stirnfläche. Es kommt zur Überlappung dieser Randbereiche. Die Überlappung stellt ein Labyrinth für das Licht dar. Die lichtdichten Eigenschaften der Verpackung werden maßgeblich durch diese Überlappung bestimmt. Das flexible Teil schmiegt sich zwar auch um den Zylinderrand, dient aber in erster Linie zur mechanischen Befestigung der Endkappe am Filmwickel.

Mit Vorteil besteht der umkreisförmige Bereich des flexiblen Teils aus zungenförmigen Abschnitten. Diese können dann ohne Falten auszubilden und ohne daß haubenförmige Hohlräume entstehen auf die äußere Zylindermantelfläche umgeklappt und dort befestigt werden. Die zungenförmigen Abschnitte werden durch Einschnitte an der Peripherie gebildet.

Hierbei ist von Vorteil, wenn die Einschnitte nicht radial - im umgeklappten Zustand verlaufen sie im wesentlichen axial - sind, sondern auf Sekanten liegen. Der umkreisförmige Bereich des flexiblen Teils wird sägezahnförmig. Es ist weiter von Vorteil, wenn die aufeinander zulaufenden Schnitte ungleich lang sind und sich nicht kreuzen. Das Umklappen des sägezahnförmigen Randes ergibt dann überlappende Bereiche. Die langen Einschnitte können nun entweder auf einem Durchmesserkreis enden der größer ist oder kleiner ist als der Außendurchmesser des Filmwickels. Eine Differenz dieser Durchmesser um etwa 10 % hat sich in der Praxis für Filmrollen mit einem Außendurchmesser zwischen 80 mm und 150 mm als günstig erwiesen. Im erstgenannten Fall, bei dem der Durchmesserkreis größer als der Außendurchmesser des Filmwickels ist, erhält man sehr gute Eigenschaften der Verpackung, da der lichtdichte Abschluß der überstehenden Bereiche von Dichtscheibe und Zylindermantelfläche zusätzlich durch das flexible Teil umwölbt wird.

Überraschenderweise konnte gefunden werden, daß die Verpackung auch im zweitgenannten Fall zuverlässig lichtdicht ist, wenn die sekantenförmigen langen Einschnitte sich über den lichtdichten Abschluß bis in die Stirnflächen des Zylinders hinein erstrecken. Darüber hinaus entstehen dann weder Hohlräume noch Falten. Ganz besonders vorteilhaft ist diese Ausführungsform der Verpackung wenn große Stückzahlen hergestellt werden sollen und dabei die Kosten des Verpackungswerkzeuges gering gehalten werden sollen. Ein einfaches Preßwerkzeug reicht aus um das Überlappen der zungenförmigen Abschnitte regelmäßig zu gestalten. Benachbarte zungenförmige Abschnitte überlappen dabei gleichsinnig. Dies hat zur Folge, daß beim Öffnen der Verpackung, die aufzubringende Kraft gleichmäßig ist.

Mit Vorteil verjüngt sich das Anfangsstück der Abdeckfolie unsymmetrisch, beispielsweise durch zwei unterschiedlich schräg zulaufende Abschnitte. Man vergleichmäßigt dadurch die erforderliche Ausziehkraft einer Tageslichtverpackung, da zuerst die zungenförmigen Abschnitte der einen und dann erst die der anderen Endkappe gerissen werden. Unerheblich ist die Form der Schräge der Abdeckfolie. Entscheidend ist, daß die beiden Schrägen mindestens um die drei- bis vierfache Breite eines zungenförmigen Abschnittes längs versetzt auseinanderliegenden.

Das Ende der Abdeckfolie ist überlappend mit dem Filmanfang verbunden. Bevorzugterweise ist die Abdeckfolie an die zum Filmwickel liegende Fläche des lichtempfindlichen Materials geklebt. Dadurch erleichtert man, trotz der stets vorhandenen Neigung des Filmmaterials sich entsprechend der Krümmung des Filmwickel wieder aufzurollen, das Herausziehen der Verbindungsstelle aus dem Schlitz des Verarbeitungsgerätes.

Mit Vorteil ist das nabenförmige Teil aus schwarz pigmentiertem Polyethylen. Dieses Material ist elastisch nachgebend und erlaubt eine kostengünstige und maßgenaue Fertigung. Der Werkstoff ist für die Wiederverwertung geeignet. Bei einer Wandstärke von 0,3 mm paßt die Wickelrolle in alle am Markt befindlichen Verarbeitungsgeräte. Die Kontaktfläche zum Aufnahmedorn ist eben, das Einlegen der Filmrolle gestaltet sich einfach. Schwankende Wickelkerntoleranzen werden durch das elastische Material ausgeglichen.

Hierbei ist bevorzugt, daß die konisch zulaufende Wirkfläche in einer Rundung endet. Üblicherweise sind die Aufnahmedorne bei vielen Verarbeitungsgeräten durch eine Steckachse verbunden. Wenn diese Steckachse beim Laden der Filmrolle durch die Wickelhülse geführt wird kann es vorkommen, daß versehentlich eine Endkappe aus der Verbindung gelöst wird. Die Rundung bewirkt, daß die Steckachse von der Endkappe abgleitet. Darüber hinaus erhöht die Rundung das Widerstandsmoment des nabenförmigen Teils, was für die automatische Handhabung Vorteile bringt.

Auch von Vorteil ist wenn das flexible Teil aus Papier ist. Bei einer Wandstärke von 0,5 mm bis 0,3 mm, insbesondere bei 0,1 mm ist ohne Reibung im Schlitz nur eine sehr geringe Ausziehkraft von etwa 5 N erforderlich.

Vorteilhaft ist auch wennn das flexible Teil aus einer lichtundurchlässigen geflämmten Polyethylenfolie mit einer Wandstärke von 0,05 mm bis 0,2 mm gefertigt ist. Besonders vorteilhaft ist eine Wandstärke von 0,08 mm. Durch die Wärmebehandlung erreicht man, daß das Material versprödet und sich der Riß überraschenderweise entlang der Umfangslinie gleichmäßig ausbreitet. Dieses Material ist wiederverwertbar.

Für die Dichtscheibe verwendet man mit Vorteil eine 0,05 mm bis 0,2 mm, bevorzugt 0,1 mm dicke schwarze Polyethylenfolie. Die Dichtscheibe paßt sich dann aufgrund ihrer Elastizität der Kontur des Zylinderrandes faltenfrei an.

Bevorzugterweise ist die Abdeckfolie eine 0,1 mm bis 0,3 mm dicke Polyethylenfolie, besonders bevorzugt wird eine Dicke von 0,2 mm. Dadurch ist sicher gestellt, daß beim Entrollen der Wickerolle der Riß an den dünnwandigen Endkappen sich ausbreitet. Darüber hinaus hat sich gezeigt, daß die Dicke der Abdeckfolie bei der Herstellung der Verpackung Vorteile bringt. Beim Anpressen der zungenförmigen Abschnitte können sogenannte Druckbelichtungen entstehen. Die Abdeckfolie wirkt elastisch nachgebend und vermindert diese unerwünschte Beeinträchtigung des Filmmaterials.

Vorteilhaft für die Wiederverwertung ist eine Verpackung aus einheitlichem Werkstoff, beispielsweis Polyethylen.

In einer besonderen Ausgestaltung der Erfindung weist jede Endkappe im umkreisförmigen Bereich eine Perforation auf. Durch diese Öffnunghilfe vermindert sich die Ausziehkraft beim Entrollen der Wickelrolle, was dem Öffnen der Verpackung entspricht. Darüber hinaus ist sichergestellt, daß die Rißausbildung entlang einer, durch die Perforation vorgegebene, definierten Rißlinie verläuft. Die Perforation ist insbesondere dann vorteilhaft wenn das flexible Teil aus einer herkömmlichen lichtundurchlässigen Polyethylenfolie besteht. Die Perforation beeinträchtigt die lichtdichten Eigenschaften der Verpackung nicht. Vorteilhafterweise liegt die Perforation auf einem Kreis dessen Durchmesser etwa gleich oder um bis zu 10 % kleiner als der äußere Durchmesser der Dichtscheibe ist. Die Perforation kann als sogenannte Linien- oder Punktperforation ausgeführt werden. Bei einer Linienperforation erhält man mit äquidistanten Einschnitten von etwa 0,7 mm ein sehr gutes Rißergebnis.

Aus dem Stand der Technik sind verschiedene Verfahren zur Herstellung der Perforation bekannt, beispielsweise kann mit einem Rotationsschnittwerkzeug das flexible Teil und die Perforation in einem Arbeitsgang hergestellt werden.

Eine einfache und kostengünstige Ausführung der Verpackung erhält man, wenn jede Stirnseite des Filmwickels durch ine Dichtscheibe und durch eine Endkappe aus Papier oder Pappe abgedeckt wird. Die Montage ist dann besonders einfach, wenn bei jeder Endkappe der nabenförmige Bereich und der die Muffe bildende umkreisförmige Bereich vorgefertigt sind. Der nabenförmige Bereich wird einfach in die Wickelhülse gesteckt und dort durch Reibungskräfte gehalten. Der umkreisförmige Bereich, der eine Muffe für den axialen Rand des Filmwickels bildet und an der zur Zylindermantelfläche liegenden Innenfläche eine klebrige Schicht aufweist, wird an die äußere Zylindermantelfläche des Filmwickels gepreßt. Endkappen aus Papier oder Pappe, mit einer Dicke von 0,1 mm bis 0,3 mm, sind für diese Ausführungsform ein bevorzugtes Material. Eine Perforation, die am umkreisförmigen Bereich jeder Endkappe angebracht ist, erleichtert das Öffnen der Verpackung. Die aufzubringende Ausziehkraft beim Entrollen der Wickelrolle verringert sich dadurch. Die aus Kunststoff gefertigte Dichtscheibe ist nicht mit dem Papier bzw. der Pappe verklebt. Bei der Wiederverwertung, also der Rückführung der Materialien, können diese leicht getrennt werden. Besonders vorteilhaft ist, wenn überhaupt nur ein Werkstoff, bespeilsweise Kunststoff, verwendet wird. Ein Trennprozeß entfällt dann vollständig.

Die Erfindung betrifft auch ein Verfahren zum lichtdichten Verpacken eines Filmwickels. Dabei werden im wesentlichen auf den Filmwickel vorbereitete Endkappen gesteckt und diese am Rand umgeklappt. Das Umklappen der zungenförmigen Abschnitte geschieht dabei vorteilhaft unter Einwirkung einer Schubspannung. Man bewirkt damit, daß das flexible Teil die Dichtscheibe so an die Stirnfläche des Filmwickels drückt, daß die Wicklrolle lichtdicht verschlossen wird. Als Werkzeug eignet sich ein geteiltes rohrförmiges Anpreßteil mit Innenliegenden Schrägflächen. Letztere bewirken daß die zungenförmigen Abschnitte so umklappen, daß sich keine Lichtkanäle bilden. Es bilden sich überlappende Bereiche, die auch zu einer Erhöhung der Lichtdichtigkeit beitragen. Haubenförmige Hohlräume treten nicht auf.

Die Erfindung wird nachstehend anhand eines Ausführungsbeispiels und zugehörigen Zeichnungen näher erläutert. In diesen zeigen:
- Fig. 1: eine Explosionsdarstellung eines Ausführungsbeispiels der Verpackung,
- Fig. 2: einen Filmwickel räumlich dargestellt,
- Fig. 3: eine Querschnittsansicht einer Wickelrolle,
- Fig. 4: eine Teilansicht einer Stirnfläche des Filmwickels mit umgeklappten zungenförmigen Abschnitten,
- Fig. 5: eine Explosionsdarstellung eines Ausführungsbeispiels einer Endkappe,
- Fig. 6: eine Detaildarstellung eines Querschnitts des nabenförmigen Teils im Innenbereich der Endkappe,
- Fig. 7: eine Aufsicht auf das flexible Teil der Endkappe,
- Fig. 8: eine schematische Darstellung der Verbindung von Abdeckfolie und Filmmaterial,
- Fig. 9 a bis c: eine schematische Darstellung einer tageslichverpackten Wickelrolle im Zustand des Entrollens,
- Fig. 10: eine Transportverpackung einer Wickelrolle,
- Fig. 11: eine schematische Darstellung des Verpackungsvorgangs.

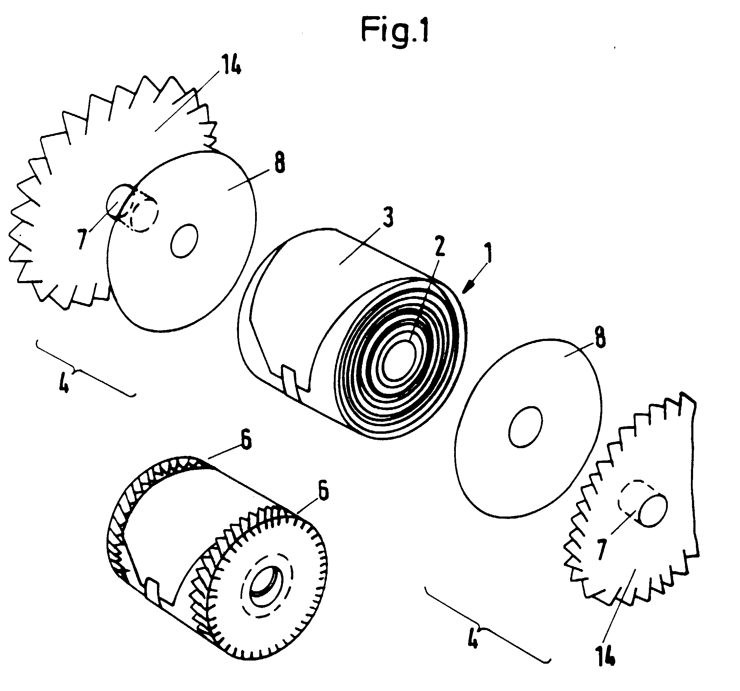

In Fig. 1 ist eine bevorzugte Ausführung einer lichtdichten Verpackung gezeigt. Die Mantelflächen des hohlzylindrischen Filmwickels 1 werden durch eine Abdeckfolie 3 und eine Wickelhülse 2 begrenzt. Jede Stirnfläche ist durch eine Endkappe 4, gebildet aus einer Dichtscheibe 8, einem flexiblen Teil 14 und einem nabenförmigen Teil 7, abgedeckt. Der umkreisförmige Bereich 6 bildet für den axialen Rand des Filmwickels eine Muffe.

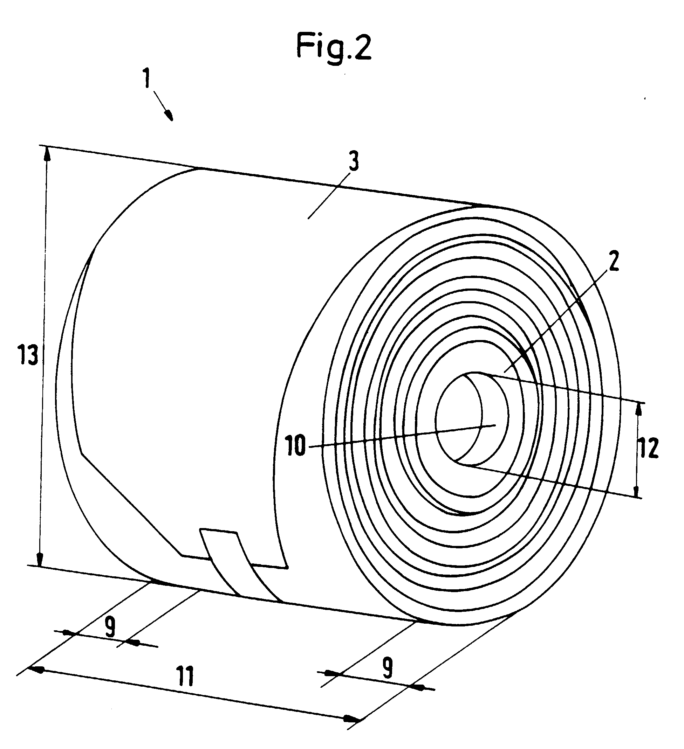

In Fig. 2 ist der Filmwickel 1 vergrößert dargestellt. Der axiale Rand 9 der äußeren Zylindermantelfläche und der axiale Rand 10 der inneren Zylindermantelfläche bilden Kontaktflächen mit der jeweiligen Endkappe. Der äußere Durchmesser 13 des Filmwickels wird durch die äußerste Windung der Abdeckfolie 3 vorgegeben. Der innere Durchmesser 12 des Filmwickels ist hier der Innendurchmesser der Wickelhülse 2. Das lichtempfindliche Material ist spiralförmig so um die Wickelhülse gewickelt, daß ein Hohlzylinder mit im wesentliche ebenen Stirnflächen entsteht und die axiale Länge des Filmwickels 11 der Zylinderlänge entspricht.

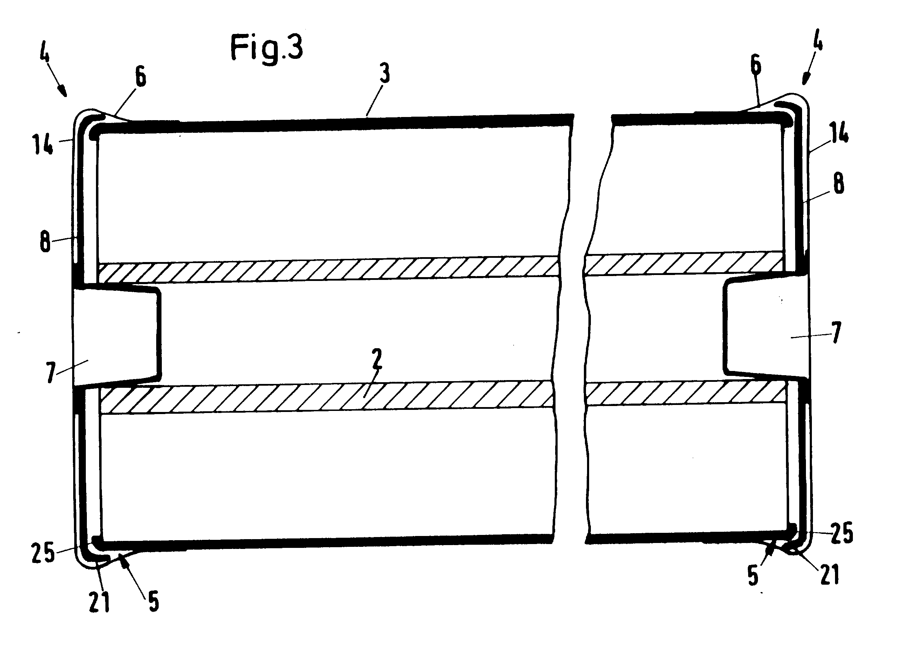

In Fig. 3 ist ein Querschnitt durch eine bevorzugte Ausführungsform der Verpackung gezeigt, wobei Zwischenräume stark übertrieben dargestellt sind. Der Aufbau der Verpackung ist symmetrisch. Jede Stirnfläche ist durch eine Endkappe 4 abgeschlossen. Das nabenförmige Teil 7 steckt in der Wickelhülse 2 und ist mit dem flexiblen Teil 14 verbunden. Der umkreisförmige Bereich 6 der Endkappe liegt an der äußeren Zylindermantelfläche. Ein Rand 25 der Abdeckfolie 3 wölbt sich auf die Stirnfläche des Filmwickels. Ein Rand 21 der Dichtscheibe 8 wölbt sich um den axial äußersten Rand der äußeren Zylindermantelfläche. Es entsteht eine überlappende Eckverbindung, die ein lichtdichtes Labyrinth 5 bildet.

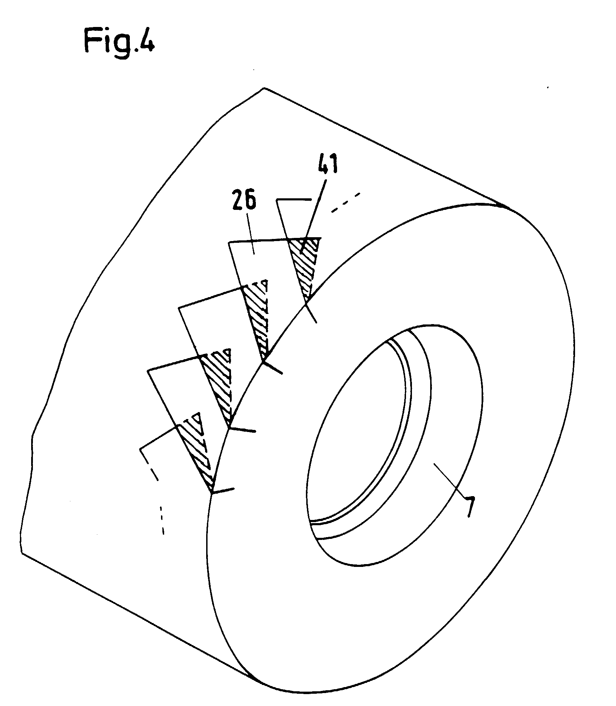

In Fig. 4 sind die zungenförmigen Abschnitte 26 und ihre Überlappung 41 vergrößert räumlich dargestellt. Diese sägezahnförmige Ausprägung des umkreisförmigen Bereichs ist ein bevorzugtes Ausführungsbeispiel der Endkappe. Die zungenförmigen Abschnitte überlappen regelmäßig. Der jeweils rechts bzw links liegnde Abschnitt liegt im umgeklappten Zustand oberhalb bzw unterhalb. Obwohl die Faltlinie der gekrümmte Zylinderrand ist, entstehen beim Umklappen keine Hohlräume. Die zungenförmigen Abschnitte sind an die Abdeckfolie geklebt, das nabenförmige Teil 7 steckt durch Haftreibung gehalten in der Wickelhülse.

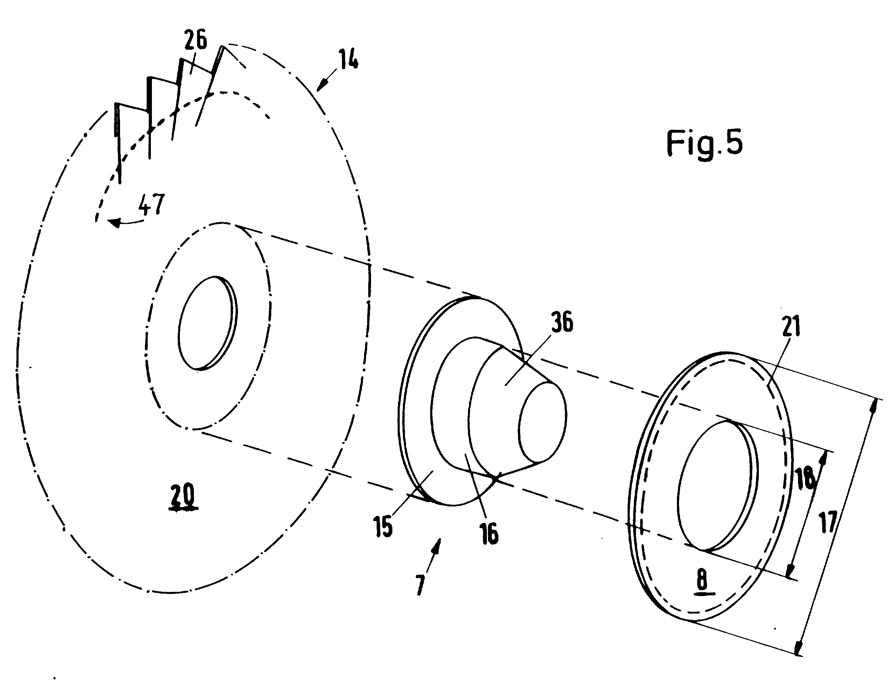

In Fig. 5 ist ein bevorzugtes Ausführungsbeispiel der Endkappe in einer Explosionsdarstellung gezeigt. Der flanschförmige Ansatz 15 des nabenförmigen Teils 7 ist durch die klebrige Schicht 20 mit dem flexiblen Teil 14 verbunden. Die Peripherie des flexiblen Teils ist teilweise dargestellt und zeigt schematisch im nicht umgeklappten Zustand die zungenförmigen Abschnitte 26 und die Perforation 47. Der buchsenförmige Ansatz 16 des nabenförmigen Teils nimmt die Dichtscheibe 8 auf. Der Innendurchmesser 18 ist geringfügig größer als der Außendurchmesser des buchsenförmigen Ansatzes. Letzterer wirkt bei der Vormontage für die Dichtscheibe 8 zentrierend. Der Außendurchmesser 17 der Dichtscheibe ist größer als der äußere Durchmesser 13 des Filmwickels. Dadurch ist gewährleistet, daß vor dem Umklappen der zungenförmigen Abschnitte der Rand 21 gleichmäßig entlang des Umfangs den Filmwickel überragt. Der buchsenförmige Ansatz 16 mündet in eine konisch zulaufende Wirkfläche 36.

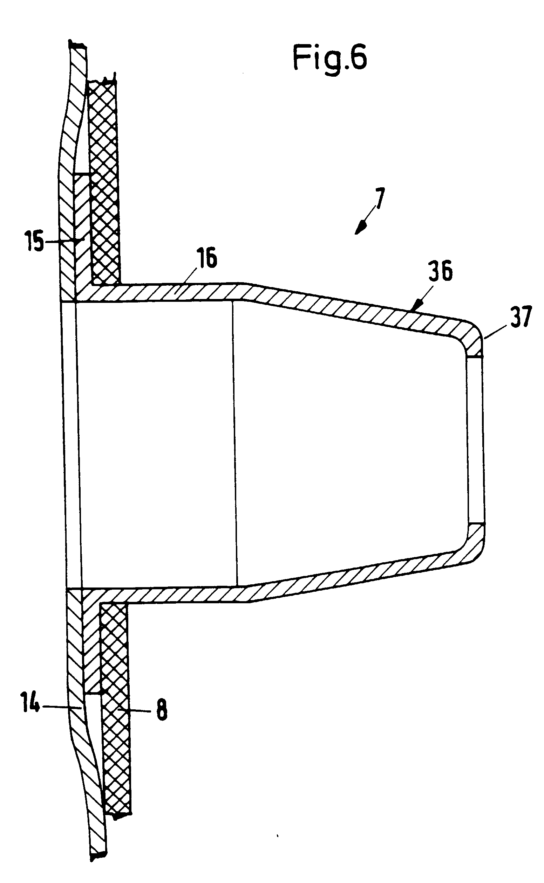

In Fig. 6 ist durch eine Detaildarstellung die Verbindung der einzelnen Teile der Endkappe gezeigt. Das flexible Teil 14 ist an die Stirnfläche des flanschförmigen Ansatzes 15 geklebt. Die klebrige Schicht 20 befindet sich an der inneren lateralen Fläche des flexiblen Teils 14. Auch die Dichtscheibe 8 ist an diese Fläche geklebt. Derart vorgefertigten Endkappen, bei denen auch der umkreisförmige Bereich bereits die zungenförmigen Abschnitte 26 aufweist, erleichtert die Montage erheblich. Die beiden Endkappe können gleichzeitig an den Filmwickel gepreßt werden, so daß im wesentlichen in einem Arbeitsschritt die Stirnflächen abgedichtet werden können. Die konische Wirkfläche 36 erleichtert das Einstecken der Endkappen. Der buchsenförmige Ansatz stellt sicher, daß auch bei Erschütterungen während des Transports die reibschlüssige Verbindung aufrechterhalten bleibt. Die Rundung 37 ist zweckdienlich beim Filmwechsel. Durch das Einführen der Steckachse werden Beschädigungen an der Verpackung vermieden. Die Wandstärke des nabenförmigen Teils kann auch abschnittsweise unterschiedlich sein. Beispielsweise kann der flanschförmige Ansatz 15 dünnwandiger ausgeführt sein. In Polyethylen ausgeführt hat sich eine Dicke des flanschförmigen Ansatzes 15 von 0,1 mm bis 0,2 mm als günstig erwiesen. Durch dieses nabenförmige Teil ist im Bereich der Wickelhülse keinerlei Versiegelung oder ein Klebstoffauftrag erforderlich.

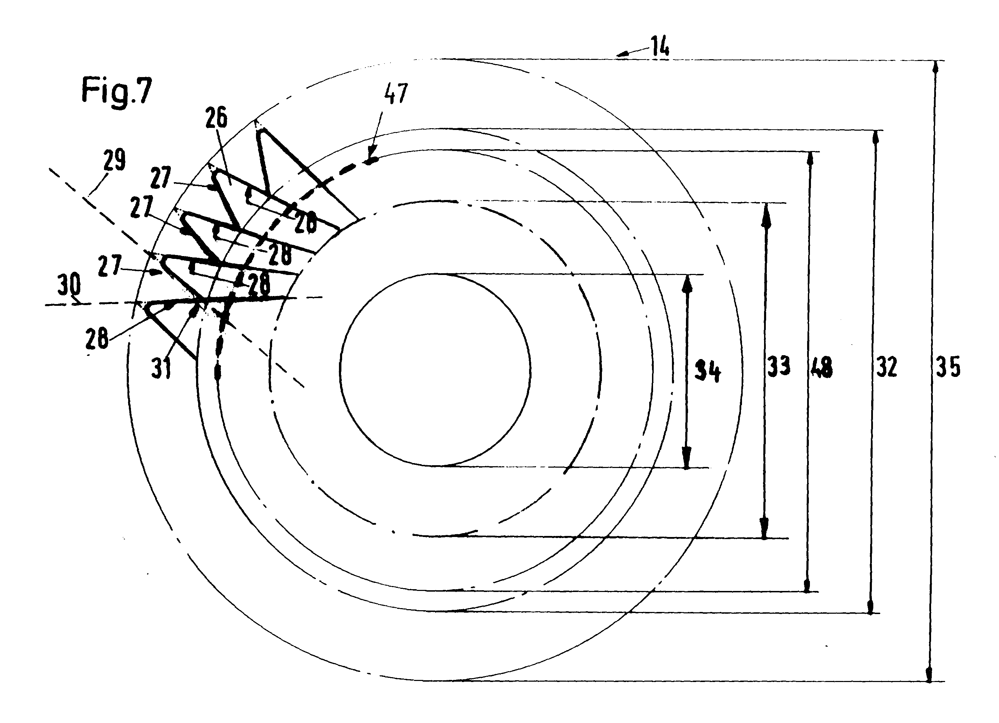

In Fig. 7 ist eine Aufsicht auf das flexible Teil 14 einer besonders bevorzugten Ausgestaltung der Endkappe dargestellt.

Der Außendurchmesser 35 des flexiblen Teils ist so bemessen, daß genügend große zungenförmige Abschnitte 26 entstehen. Die zungenförmigen Abschnitte werden duch unterschiedlich lange auf Sekanten 29, 30 liegende Einschnitte an der Peripherie gebildet. Die langen Einschnitte 28 enden auf einem Durchmesserkreis 33 der kleiner als der äußere Durchmesser 13 des Filmwickels 1 ist. Die Perforation besteht aus gleichmäßigen Einschnitten die auf dem Kreis 48 liegen. Die kurzen Einschnitte 27 enden auf dem Kreis 32 der Sekantenschnittpunkte. Der Innendurchmesser 34 ist so gewählt, daß das flexible Teil 14 mittig auf dem nabenförmigen Teil 7 montiert werden kann. Um bei der Herstellung des flexiblen Teils 14, welches beispielsweise durch Stanzen oder Rotationsschneiden erfolgen kann, eine leichtere Entformbarkeit des Nutzen vom Stanz- bzw. Schneidwerkzeuges zu gewährleisten wurden - wie in Fig. 7 dargestellt - die Spitzen der zungenförmigen Abschnitte abgerundet.

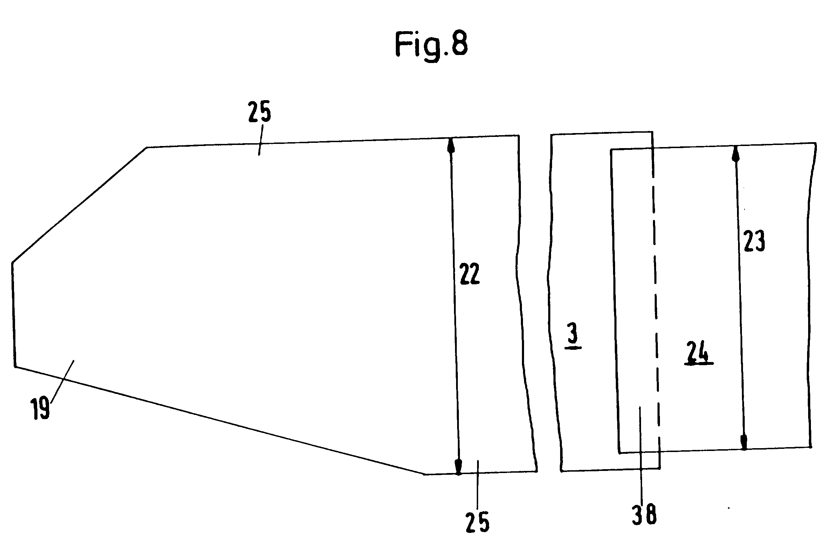

In Fig. 8 ist schematisch die Verbindung von Abdeckfolie 3 und lichtempfindlichem Material 24 mit Blick auf die abgerollte äußere Zylindermantelfläche dargestellt. Da die Breite 22 der Abdeckfolie größer als die Breite 23 des lichtempfindlichen Materials ist, entsteht ein beidseits überstehender Rand 25. Das zungenförmige Anfangsstück 19 der Abdeckfolie wird durch unterschiedlich schräge am Rand versetzt liegende Abschnitte gebildet. Im Bereich der überlappenden Klebstelle 38 liegt bei dieser Betrachtung die Filmbahn auf der Abdeckfolie.

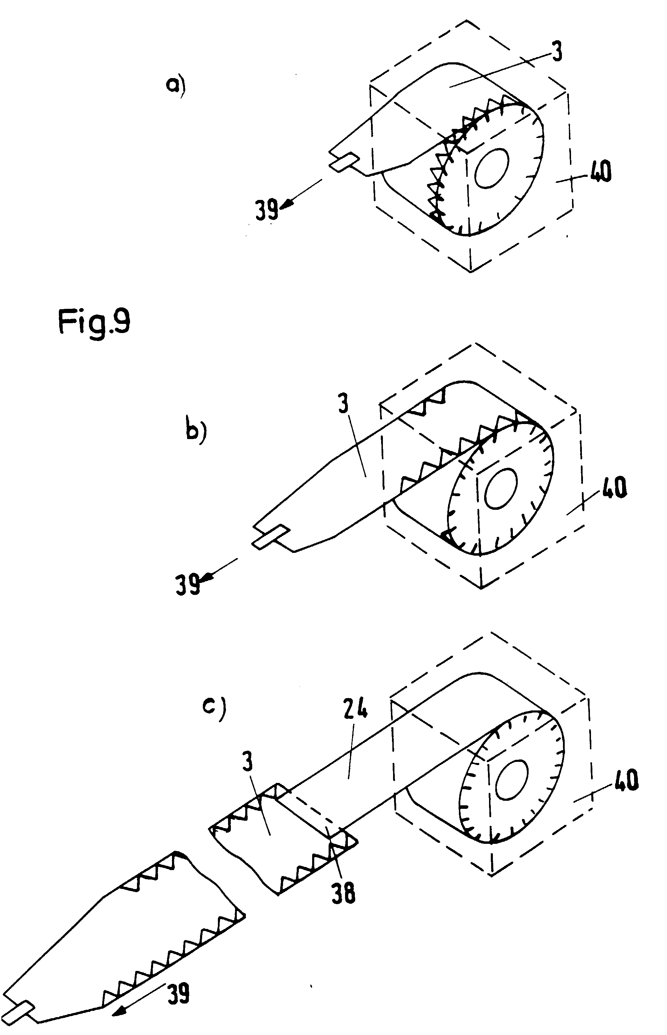

In Fig. 9 ist eine Tageslichtverpackung im Zustand des Entrollens schematisch dargestellt. Durch die in Pfeilrichtung wirkende Ausziehkraft 39 wird in Fig. 9a das zungenförmige Anfangsstück der Abdeckfolie 3 durch den lichtdichten Schlitz einer strichliert dargestellten Aufnahmevorrichtung 40 gezogen. Bis der erste zungenförmige Abschnitt einer Endkappe eine Zugspannung erfährt entspricht die Ausziehkraft der Reibung der Abdeckfolie im Schlitz. Sie erhöht sich bis diese zungenförmigen Abschnitte reißen um dann auf einen Wert abzufallen, der durch die erforderliche Reißkraft entlang dieser Endkappe und durch die Reibkraft im Schlitz vorgegeben wird. Die erforderliche Ausziehkraft erhöht sich abermals wenn die zungenförmigen Abschnitte der anderen Endkappe reißen (Fig 9b). Sie vermindert sich danach auf einen Wert der etwa der doppelten Reißkraft einer Endkappe und der Reibkraft im Schlitz entspricht bis die Endkappen vom umkreisförmigen Teil getrennt sind und das lichtempfindliche Material 24 aus dem Schlitz austritt (Fig. 9c). Die Klebstell 38 wird gelöst, die Abdeckfole vom Film getrennt.

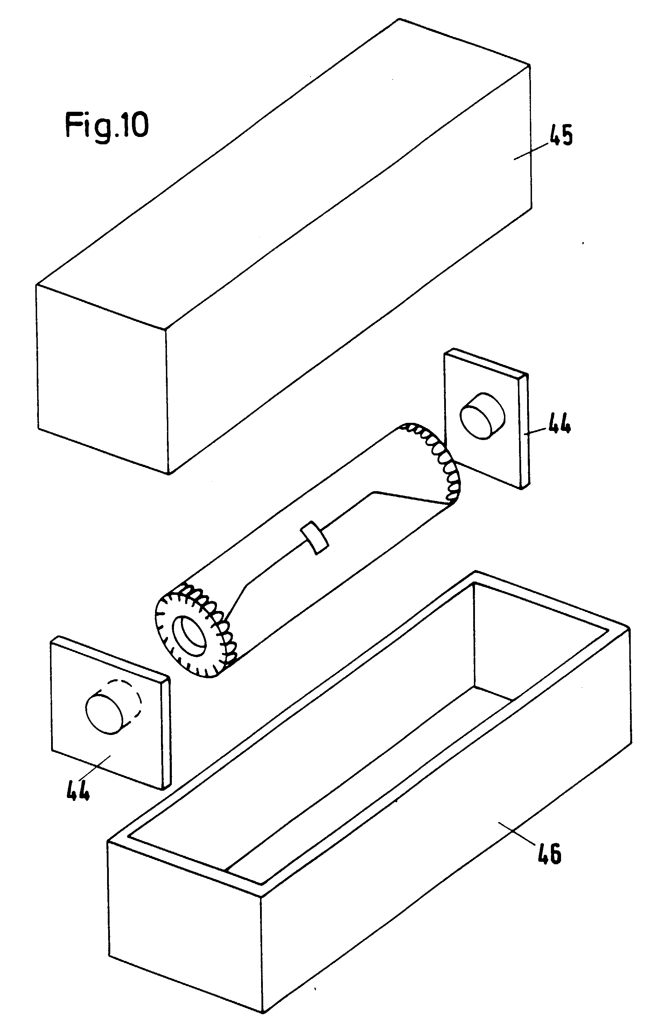

In Fig. 10 ist eine Transportverpackung für Wickelrollen gezeigt. Jede Seite der Wickelrolle ruht auf einem Stützteil 44. Die Stützteile passen formschlüssig in die Schachtel 45 mit dem Deckteil 46. Das Filmmaterial ist so auch vor mechanischen Beschädigungen geschützt. Aus dem Stand der Technik bekannte Bordscheiben sind für diese Verpackung nicht mehr erforderlich.

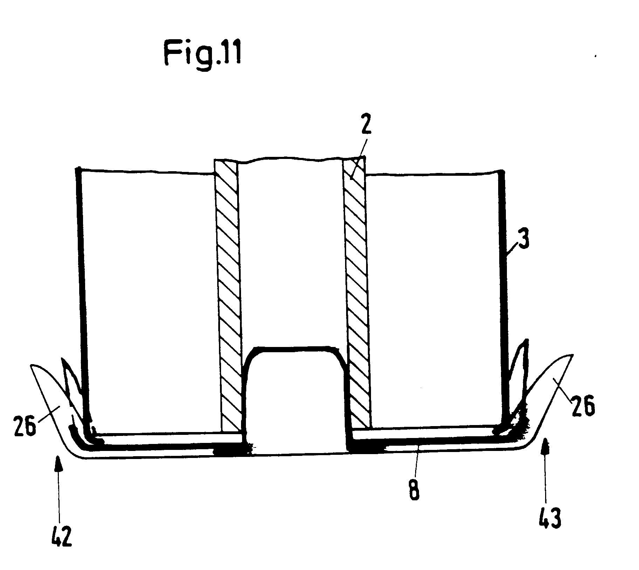

In Fig. 11 ist schematisch der Verpackungsvorgang skizziert. Das nabenförmige Teil der Endkappe wird in die Wickelhülse 2 gesteckt. Auf die zungenförmigen Abschnitte 26 wirkt eine Schubspanng, die über ein nicht näher dargestelltes Preßwerkzeug, das sich in Richtung der Pfeile 42, 43 bewegt, erzeugt wird. Das Preßwerkzeug drückt durch eine nicht dargestellte Schrägfläche auch in radialer Richtung, so daß die Dichtscheibe 8 mit der Stirnfläche und die zungenförmigen Abschnitte 26 mit der Abdeckfolie 3 fest zur Anlage kommen.

## Patentansprüche

1. Verpackung für lichtempfindliches Material welches spriralförmig um eine Wickelhülse gewickelt ist und einen hohlzylindrischen Filmwickel bildet dessen Stirnflächen im wesentlichen flach ausgebildet sind und dessen axiale Länge im wesentlichen durch die Breite des streifenförmigen Materials vorgegeben wird, wobei die äußere Zylindermantelfläche durch eine Abdeckfolie, die innere Zylindermantelfläche durch eine Wickelhülse, und jede Stirnfläche durch ein Abdeckelement lichtdicht umhüllt wird,
**dadurch gekennzeichnet,**
daß das Abdeckelement eine lichtundurchlässige dünnwandige Endkappe ist die sich über die Stirnfläche und über hieran angrenzende axiale Ränder der inneren und äußeren Zylindermantelfläche erstreckt ohne dabei die axiale Länge oder den Innendurchmesser des Filmwickels wesentlich zu verändern.

2. Verpackung für lichtempfindliches Material nach Anspruch 1 dadurch gekennzeichnet, daß jede Endkappe gebildet wird durch
einen scheibenförmigen Bereich, der sich mindestens zwischen der Abdeckfolie und der Wickelhülse erstreckt und einen umkreisförmigen Bereich aufweist der eine Muffe für den axialen Rand des Filmwickels bildet und mit der Abdeckfolie fest verbunden ist;
eine Dichtscheibe, die zwischen dem scheibenförmigen Bereich und der Stirnfläche des Filmwickels liegt und mit dem Filmwickel nicht verbunden ist;
einen nabenförmigen Bereich der die Wickelhülse steckbar aufnimmt.

3. Verpackung für lichtempfindliches Material nach Anspruch 1 dadurch gekennzeichnet, daß jede Endkappe (4) gebildet wird durch
ein flexibles Teil (14), das sich mindestens zwischen der Abdeckfolie (3) und der Wickelhülse (2) erstreckt und einen umkreisförmigen Bereich (6) aufweist der eine Muffe für den axialen Rand des Filmwickels bildet, dessen zum Filmwickel hin liegende Innenfläche mit einer klebrigen Schicht (20) beschichtet ist mittels derer der umkreisförmige Bereich an der Abdeckfolie, der die Stirnfläche abdeckende Bereich an
eine Dichtscheibe (8) und der verbleibende innere Rand an
ein nabenförmiges Teil (7), welches die Wickelhülse steckbar aufnimmt, geklebt ist.

4. Verpackung für lichtempfindliches Material nach Anspruch 3 dadurch gekennzeichnet, daß das nabenförmige Teil einen buchsenförmigen Ansatz (16) und eine konische Wirkfläche (36) aufweist, die die Endkappe (4) mit der Wickelhülse (2) lichtdicht aber lösbar verbinden.

5. Verpackung für lichtempfindliches Material nach Anspruch 4 dadurch gekennzeichnet, daß der Außendurchmesser des buchsenförmigen Ansatzes (16) größer als der Innendurchmesser der Wickelhülse ist.

6. Verpackung für lichtempfindliches Material nach Anspruch 3 dadurch gekennzeichnet, daß der äußere Durchmesser der Dichtscheibe (8) größer als der äußere Durchmesser des Filmwickels (1) ist.

7. Verpackung für lichtempfindliches Material nach Anspruch 6 dadurch gekennzeichnet, daß der äußerer Durchmesser der Dichtscheibe (8) um 1,4 mm bis 4 mm größer als der äußerer Durchmesser des Filmwickels (1) ist.

8. Verpackung für lichtempfindliches Material nach Anspruch 1 dadurch gekennzeichnet, daß die Abdeckfolie (3) den Vorspann zum bahnförmigen lichtempfindlichen Material (24) bildet, mittig mit diesem durch eine Klebstelle (38) verbunden ist und in ihrer Länge mindestens die äußerste Windung des Filmwickels vollständig umhüllt, und in ihrer Breite (22) größer als die Breite (23) des bahnförmigen lichtempfindlichen Materials ist.

9. Verpackung für lichtempfindliches Material nach Anspruch 2, 3, 6 und 8 dadurch gekennzeichnet, daß die Endkappe (4) so angebracht ist, daß der Rand (25) der Abdeckfolie mit dem Rand (21) der Dichtscheibe ein lichtdichtes Labyrinth (5) bildet indem sich der Rand (25) zur Stirnfläche und der Rand (21) zur äußeren Zylindermantelfläche faltenfrei wölbt.

10. Verpackung für lichtempfindliches Material nach Anspruch 3 dadurch gekennzeichnet, daß der umkreisförmige Bereich (6) aus zungenförmigen Abschnitten (26) besteht, die durch Einschnitte gebildet werden, die an der Peripherie des flexiblen Teils (14) beginnen und knapp vor dem äußeren Durchmesser des Filmwickels enden, und daß die zungenförmigen Abschnitte an die Abdeckfolie so geklebt sind daß das flexible Teil am Filmwickel anliegt.

11. Verpackung für lichtempfindliches Material nach Anspruch 3 dadurch gekennzeichnet, daß der umkreisförmige Bereich (6) aus zungenförmigen Abschnitten (26) besteht, die durch Einschnitte gebildet werden, die an der Peripherie des flexiblen Teils (14) beginnen und auf einem Kreis enden dessen Durchmesser kleiner als der äußere Durchmesser des Filmwickels ist und daß die zungenförmigen Abschnitte an die Abdeckfolie so geklebt sind daß das flexible Teil am Filmwickel anliegt.

12. Verpackung für lichtempfindliches Material nach Anspruch 10 oder 11 dadurch gekennzeichnet, daß jeder zungenförmige Abschnitt (26) durch zwei unterschiedlich lange auf Sekanten (29, 30) liegende aufeinander zulaufende sich jedoch nicht kreuzende Schnitte (27, 28) gebildet wird, wobei im umgeklappten Zustand im Bereich des Sekantenschnittpunktes (31) sich die zungenförmigen Abschnitte überlappen.

13. Verpackung für lichtempfindliches Material nach Anspruch 8 dadurch gekennzeichnet, daß die den Vorspann zum lichtempfindlichen Material bildende Abdeckfolie mindestens im Bereich der Umfangslänge der Filmrolle breiter als die Filmbahn ist, sich zum Anfang hin verjüngt und ein zungenförmiges Anfangsstück (19) bildet das unsymmetrisch ist und an der äußeren Zylindermantelfläche befestigt ist.

14. Verpackung für lichtempfindliches Material nach Anspruch 13 dadurch gekennzeichnet, daß bei der Klebstelle (38) die radial innen liegende Fläche des lichtempfindlichen Materials (24) mit der radial außen liegenden Fläche der Abdeckfolie (3) zur Anlage kommt.

15. Verpackung für lichtempfindliches Material nach Anspruch 3 dadurch gekennzeichnet, daß das nabenförmige Teil (7) aus schwarz pigmentiertem Polyethylen mit einer Wandstärke von 0,2 mm bis 0,3 mm gefertigt ist.

16. Verpackung für lichtempfindliches Material nach Anspruch 4 dadurch gekennzeichnet, daß die konisch zulaufende Wirkfläche (36) des nabenförmigen Teils (7) axial in das Innere der Wickelhülse ragt und in einer Rundung (37) endet.

17. Verpackung für lichtempfindliches Material nach Anspruch 3 dadurch gekennzeichnet, daß das flexible Teil (14) aus lichtundurchlässigem Papier mit einer Wandstärke von 0,05 mm bis 0,3 mm gefertigt ist.

18. Verpackung für lichtempfindliches Material nach Anspruch 3 dadurch gekennzeichnet, daß das flexible Teil (14) aus einer lichtundurchlässigen geflämmten Polyethylenfolie mit einer Dicke von 0,05 mm bis 0,2 mm gefertigt ist.

19. Verpackung für lichtempfindliches Material nach Anspruch 2 oder 3 dadurch gekennzeichnet, daß die Dichtscheibe (8) aus einer lichtundurchlässigen Polyethylenfolie mit einer Dicke von 0,05 mm bis 0,2 mm gebildet wird.

20. Verpackung für lichtempfindliches Material nach Anspruch 1 dadurch gekennzeichnet, daß die Abdeckfolie (3) eine Polyethylenfolie mit einer Dicke von 0,1 mm bis 0,3 mm ist.

21. Verpackung für lichtempfindliches Material nach Anspruch 2 dadurch gekennzeichnet, daß die Dichtscheibe (8) aus einer Polyethylenfolie, der scheibenförmige Bereich und der nabenförmige Bereich der Endkappe aus 0,3 mm bis 0,5 mm dickem Papier oder Pappe gefertigt ist.

22. Verpackung für lichtempfindliches Material nach Anspruch 3 dadurch gekennzeichnet, daß die Dichtscheibe (8), das nabenförmige Teil (7) und die Abdeckfolie (3) aus Material gleicher Zusammensetzung besteht und wiederverwertbar ist

23. Verpackung für lichtempfindliches Material nach Anspruch 2 oder 3 dadurch gekennzeichnet, daß jede Endkappe im umkreisförmigen Bereich eine Perforation aufweist.

24. Verpackung für lichtempfindliches Material nach Anspruch 23 dadurch gekennzeichnet, daß die Perforation längs eines Kreises verläuft dessen Durchmesser kleiner oder gleich dem äußeren Durchmesser der Dichtscheibe ist.

25. Verfahren zur lichtdichten Umhüllung eines Filmwickels aus photographischem Material das um eine Wickelhülse gewickelt ist und einen Hohlzylinder bildet dessen äußere Zylindermantelfläche und dessen Stirnflächen so von lichtdichtem Material umgeben sind, daß die Breite und der Innendurchmesser des Filmwickels nur unwesentlich verändert wird, gekennzeichnet durch die folgenden Schritte:
1.) Verbinden eines ersten Endes einer lichtdichten Abdeckfolie, die breiter als die Filmbahn ist und den Filmwickel geringfügig überragt, mit dem Ende der äußersten Spirale des lichtempfindlichen Materials;
2.) Umwickeln des lichtempfindlichen Materials mit der Abdeckfolie und Befestigen des zweiten Endes der Abdeckfolie am äußeren Zylindermantel;
3.) Anbringen von zwei Endkappen wobei deren nabenförmige Bereiche beidseits in die Wickelhülse gesteckt und dann dort durch Reibkräfte gehalten werden, deren scheibenförmige Teile mit ihren umkreisförmigen Bereichen, die zungenförmige Abschnitte aufweisenden, den Filmwickel überragen;
5.) Umklappen der zungenförmigen Abschnitte, wobei während des Umklappens am Umfang der äußeren Zylindermantelfläche und in Richtung zum Filmwickel entlang axparalleler Tangentiallinien auf die zungenförmigen Abschnitte in zunehmendem Maße eine Schubspannung wirkt, wodurch die Stirnfläche mit der Dichtscheibe fest zur Anlage kommt und der äußere Rand der Dichtscheibe zusammen mit dem den Filmwickel überragenden Teil der Abdeckfolie ein lichtdichtes Labyrinth bildet, wodurch Endkappen, Abdeckfolie und Wickelhülse das lichtempfindliche Material lichtdicht umhüllen.

## Claims

1. Packaging for a strip of photosensitive material wound spirally on a core to form a cylindrical, hollow core film roll having essentially flat end faces and having an axial length predetermined essentially by a width of the strip material, whereby an outer circumferential surface of the film roll is covered in a lightproof manner by a cover sheet, an inner circumferential surface of the film roll by the core, and each of the end faces by a cover element,
characterized in that
the cover element is an opaque end cap that extends over the end face and associated, bordering, axial edges of the inner and the outer circumferential surfaces essentially without changing the axial length or an inner diameter of the film roll.

2. The packaging for a strip of photosensitive material according to claim 1, characterized in that each of the end caps comprises:
a flexible section that extends at least between the cover sheet and the core and has a peripheral area that forms a sleeve for an axial edge of the film roll and is attached firmly to the cover sheet,
a sealing disc located between the flexible section and the end face of the film roll and not attached to the film roll, and
a hub-shaped section that can be inserted into the core.

3. The package for a strip of photosensitive material according to claim 1, characterized in that each end cap (4) is formed of a flexible section (14), which extends at least between the cover sheet (3) and the core (2) and has a peripheral area (6) that forms a sleeve for an axial edge of the film roll, the sleeve having an inner surface facing the film roll coated with an adhesive layer (20) by means of which the peripheral area is adhered to the cover sheet an area of the flexible section covering the end face is adhered to the sealing disk (8), and an inner edge of the flexible section is adhered to a hub-shaped section (7), which can be inserted into the core.

4. The package for a strip of photosensitive material according to claim 3, characterized in that the hub-shaped section has a sleeve-shaped extension (16) and a conical surface (36) that join each of the end caps (4) with the core (2) in a lightproof, but separable manner.

5. The package for a strip of photosensitive material according to claim 4, characterized in that an outer diameter of the sleeve-shaped extension (16) is larger than an inner diameter of the core.

6. The package for a strip of photosensitive material according to claim 3, characterized in that an outer diameter of the sealing disk (8) is larger than an outer diameter of the film roll (1).

7. The package for a strip of photosensitive material according to claim 6, characterized in that the outer diameter of the sealing disk (8) is 1,4 mm to 4 mm larger than the outer diameter of the film roll (1).

8. The package for a strip of photosensitive material according to claim 1, characterized in that the cover sheet (3) forms a leader for the photosensitive strip material (24), is centered on and attached to the material by an adhesive area (38), is long enough to completely enclose the outer circumferential surface of the film roll, and has a width (22) larger than the the width (23) of the photosensitive strip material.

9. The package for a strip of photosensitive material according to claim 2, 3, 6, and 8, characterized in that the end cap (4) is placed so that the edge (25) of the cover sheet forms a lightproof labyrinth (5) with the edge (21) of the sealing disk (8), while the edge (25) curves fold-free onto the end face and the edge (21) curves fold-free onto the outer circumferential surface.

10. The package for a strip of photosensitive material according to claim 3, characterized in that the peripheral area (6) comprises flap-shaped segments (26) that are formed by incisions starting on the periphery of the flexible section (14) and terminating just before the outer diameter of the film roll and in that the flap-shaped segments are adhered to the cover sheet so that the flexible section lies on the film roll.

11. The package for a strip of photosensitive material according to claim 3, characterized in that the peripheral area (6) comprises flap-shaped segments (26) that are formed by incisions starting on the periphery of the flexible section (14) and terminating on a circle with a diameter smaller than the outer diameter of the film roll and in that the flap-shaped segments are adhered to the cover sheet so that the flexible section lies on the film roll.

12. The package for a strip of photosensitive material according to claim 10 or 11, characterized in that each of the flap-shaped segments (26) is formed by two different length incisions (27, 28) lying on secants (29, 30) that meet but do not cross over each other, whereby the flap-shaped segments, when curved down, overlap each other in an area of the secant intersection point (31).

13. The package for a strip of photosensitive material according to claim 8, characterized in that the cover sheet forming the leader of the photosensitive material is wider than the film strip at least in the area along the outer circumferential surface of the film roll, tapers toward a starting end, and forms a flap-shaped starter piece (19) that is asymmetrically and is attached to the outer circumferential surface.

14. The package for a strip of photosensitive material according to claim 13, characterized in that, at the adhesion area (38), the radial inner surface of the photosensitive material (24) is adhered to the radial outer surface of the cover sheet (3).

15. The package for a strip of photosensitive material according to claim 3, characterized in that the conical surface of the hub-shaped section (7) is made of black pigmented polyethylene having a thickness of 0,2 mm to 0,3 mm.

16. The package for a strip of photosensitive material according to claim 4, characterized in that the conical surface (36) of the hub-shaped section (7) projects axially into the interior of the core and terminates in a rounded edge (37).

17. The package for a strip of photosensitive material according to claim 3, characterized in that the flexible section (14) is made of opaque paper with a thickness of 0,05 mm to 0,3 mm.

18. The package for a strip of photosensitive material according to claim 3, characterized in that the flexible section (14) is made of an opaque, flametreated, polyethylene sheet having a thickness of 0,05 mm to 0,2 mm.

19. The package for a strip of photosensitive material according to claim 2 or 3, characterized in that the sealing disk (8) is made of an opaque polyethylene sheet having a thickness of 0,05 mm to 0,2 mm.

20. The package for a strip of photosensitive material according to claim 1, characterized in that the cover sheet (3) is made of polyethylene having a thickness of 0,1 mm to 0,3 mm.

21. The package for a strip of photosensitive material according to claim 2, characterized in that the sealing disk (8) is made of polyethylene, the flexible section and the hub-shaped section of the end cap is made of paper or cardboard having a thickness of 0,3 mm to 0,5 mm.

22. The package for a strip of photosensitive material according to claim 3, characterized in that the sealing disc (8), the hub-shaped section (7) and the cover sheet (3) comprises material of the same composition and can be recycled.

23. The package for a strip of photosensitive material according to claim 2, characterized in that each of the end caps has perforations in the peripheral area.

24. The package for a strip of photosensitive material according to claim 23, characterized in that the perforations run along a circle having a diameter that is smaller or equal to the outer diameter of the sealing disk.

25. A process for enclosing in a lightproof manner a film roll of a strip of photographic material that is wound on a core and forms a hollow-core cylinder having an outer circumferential surface and end faces surrounded by lightproof material comprising a cover sheet and two end caps, the film roll having a width and inner diameter that is essentially unchanged by the lightproof material, characterized by the following steps:
joining a first end of the opaque cover sheet, which is wider than the film strip and slightly overhangs the film roll, to the end of an outermost spiral of the photosensitive material;
winding the cover sheet around the photosensitive material and attaching the second end of the cover sheet to an outer circumferential surface of the cover sheet;
mounting the two end caps having hub-shaped areas inserted from both sides into the core and held there by friction, and so that flexible sections with peripheral areas having flap-shaped segments overhang the film roll;
curving the flap shaped segments downward, whereby, during the curving action, a pressure acts incrementally on the flap shaped segments towards a periphery of the outer circumferential surface of the cover sheet and in the direction toward the film roll, as a result of which the end face comes firmly together with the sealing disk, and an outer edge of the sealing disk forms a lightproof labyrinth with an edge of the cover sheet overhanging the film roll, so that the end cups, the cover sheet, and the core enclose the photosensitive material in a lightproof manner.

## Revendications

1. Emballage pour un matériau sensible à la lumière qui est enroulé en forme de spirale autour d'un tube de bobine pour former une bobine de pellicule en forme de cylindre creux dont les surfaces d'extrémité sont sensiblement planes et dont la longueur axiale est prédéterminée sensiblement par la largeur du matériau en forme de bande, la surface d'enveloppe extérieure étant enveloppée de façon étanche à la lumière par une feuille de recouvrement, la surface d'enveloppe intérieure du cylindre étant enveloppée de façon étanche à la lumière par un tube de bobine et chaque surface d'extrémité étant enveloppée de façon étanche à la lumière par un élément de recouvrement, caractérisé en ce que l'élément de recouvrement est un capuchon d'extrémité à paroi mince et opaque à la lumière qui s'étend sur les surfaces d'extrémité ainsi que sur des bords axiaux de délimitation locale des surfaces d'enveloppe intérieures et extérieures du cylindre sans modifier sensiblement pour autant la longueur axiale ou le diamètre intérieur de la bobine de pellicule.

2. Emballage pour matériau sensible à la lumière selon la revendication 1, caractérisé en ce que chaque capuchon d'extrémité est formé par :
une zone en forme de disque qui s'étend au moins entre la feuille de recouvrement et le tube de bobine et qui présente une zone de forme circonférentielle constituant un manchon pour l'extrémité axiale de la bobine de pellicule et avec laquelle la feuille de recouvrement est reliée de façon rigide;
une rondelle d'étanchéité, qui est située entre la zone en forme de disque et la face frontale de la bobine de pellicule, et à laquelle la bobine de pellicule n'est pas reliée;
une zone en forme de moyeu qui reçoit par enfichage le tube de bobine.

3. Emballage pour matériau sensible à la lumière selon la revendication 1, caractérisé en ce que chaque capuchon d'extrémité (4) est formé par
une partie flexible (14) qui s'étend au moins entre la feuille de recouvrement (3) et le tube de bobine (2) et qui présente une zone en forme de circonférence (6) qui constitue un manchon pour le bord axial de la bobine de pellicule, dont la surface intérieure dirigée vers la bobine de pellicule est revêtue d'une couche adhésive (20) au moyen de laquelle la zone en forme de couronne circulaire est collée sur la feuille de recouvrement, la zone recouvrant la surface d'extrémité est collée sur une rondelle d'étanchéité (8) et le reste du bord intérieur est collé sur une partie en forme de moyeu (7) qui reçoit le tube de bobine par enfichage.

4. Emballage pour matériau sensible à la lumière selon la revendication 3, caractérisé en ce que la partie en forme de moyeu présente un prolongement en forme de douille (16) et une surface d'appui conique (36) qui relie le capuchon d'extrémité (4) au tube de bobine (2) de façon étanche à la lumière, mais amovible.

5. Emballage pour matériau sensible à la lumière selon la revendication 4, caractérisé en ce que le diamètre extérieur du prolongement en forme de manchon (16) est supérieur au diamètre intérieur du tube de bobine.

6. Emballage pour matériau sensible à la lumière selon la revendication 3, caractérisé en ce que le diamètre extérieur de la rondelle d'étanchéité (8) est supérieur au diamètre extérieur de la bobine de pellicule (1).

7. Emballage pour matériau sensible à la lumière selon la revendication 6, caractérisé en ce que le diamètre extérieur de la rondelle d'étanchéité (8) est supérieur d'environ 1,4 mm à 4 mm au diamètre extérieur de la bobine de pellicule (1).

8. Emballage pour matériau sensible à la lumière selon la revendication 1, caractérisé en ce que la feuille de recouvrement (3) constitue la bande amorce pour le matériau sensible à la lumière en forme de bande (24), est reliée au centre à la bande de matériau sensible à la lumière au moyen d'une zone de collage (38) et, sur sa longueur, enveloppe complètement au moins la spire la plus extérieure de la bobine de pellicule, et, en ce qui concerne sa largeur (22) présente une largeur supérieure à la largeur (23) du matériau sensible à la lumière en forme de bande.

9. Emballage pour matériau sensible à la lumière selon la revendication 2, 3, 6 et 8, caractérisé en ce que le capuchon d'extrémité (4) est appliqué de telle façon que le bord (25) de la feuille de recouvrement constitue, avec le bord (21) de la rondelle d'étanchéité, un labyrinthe étanche à la lumière (5) du fait que le bord (25) est rabattu, sans pli, sur la surface d'extrémité, et le bord (21) est rabattu sans pli sur la surface d'enveloppe extérieure du cylindre.

10. Emballage pour matériau sensible à la lumière selon la revendication 3, caractérisé en ce que la zone en forme de couronne circulaire (6) est composée de sections en forme de languettes (26) réalisées grâce à des découpes qui commencent à la périphérie de la partie flexible (14) pour se terminer juste avant le diamètre extérieur de la bobine de pellicule, et en ce que les sections en forme de languettes sont collées sur la feuille de recouvrement de telle façon que la partie flexible s'appuie sur la bobine de pellicule.

11. Emballage pour matériau sensible à la lumière selon la revendication 3, caractérisé en ce que la zone en forme de couronne circulaire (6) est composée de sections en forme de languettes (26) formées par des découpes qui commencent à la périphérie de la partie flexible (14) et qui se terminent sur un cercle dont le diamètre est inférieur au diamètre extérieur de la bobine de pellicule, et en ce que les sections en forme de languettes sont collées sur la feuille de recouvrement de sorte que la partie flexible s'appuie sur la bobine de pellicule.

12. Emballage pour matériau sensible à la lumière selon la revendication 10 ou 11, caractérisé en ce que chaque section en forme de languettes (26) est formée de deux découpes (27,28) de longueurs différentes qui s'approchent l'une de l'autre le long de lignes sécantes (29,30) mais qui ne se croisent pas, de telle sorte qu'à l'état replié, les sections en forme de languettes se recouvrent dans la zone du point de croisement (31) des lignes sécantes .

13. Emballage pour matériau sensible à la lumière selon la revendication 8, caractérisé en ce que la feuille de recouvrement formant la bande amorce pour le matériau sensible à la lumière, au moins dans la zone de la longueur périphérique de la bobine de pellicule, plus large que la bande continue de film, va en s'effilant à son début et constitue une pièce de départ en forme de languette (19), non-symétrique et qui est fixée sur la surface d'enveloppe extérieure du cylindre.

14. Emballage pour matériau sensible à la lumière selon la revendication 13, caractérisé en ce qu'au niveau de la zone de collage (38), la surface dirigée radialement vers l'intérieur du matériau sensible à la lumière (24) vient s'appuyer contre la surface de la feuille de recouvrement (3) disposée radialement à l'extérieur.

15. Emballage pour matériau sensible à la lumière selon la revendication 3, caractérisé en ce que la partie en forme de moyeu (7) est fabriquée à partir de polyéthylène à pigmentation noire, avec une épaisseur de paroi de 0,2 mm jusqu'à 0,3 mm.

16. Emballage pour matériau sensible à la lumière selon la revendication 4, caractérisé en ce que la surface d'appui de forme conique (36) de la partie en forme de moyeu (7) fait saillie axialement à l'intérieur du tube de bobine, et se termine par une zone arrondie (37).

17. Emballage pour matériau sensible à la lumière selon la revendication 3, caractérisé en ce que la partie flexible (14) est fabriquée à partir d'un papier opaque à la lumière avec une épaisseur de paroi de 0,05 mm à 0,3 mm.

18. Emballage pour matériau sensible à la lumière selon la revendication 3, caractérisé en ce que la partie flexible (14) est fabriquée à partir d'une feuille de polyéthylène marbrée et opaque à la lumière, avec une épaisseur de 0,05 mm jusqu'à 0,2 mm.

19. Emballage pour matériau sensible à la lumière selon la revendication 2 ou 3, caractérisé en ce que la rondelle d'étanchéité (8) est formée d'une feuille de polyéthylène opaque à la lumière avec une épaisseur de 0,05 mm jusqu'à 0,2 mm.

20. Emballage pour matériau sensible à la lumière selon la revendication 1, caractérisé en ce que la feuille de recouvrement (3) est une feuille de polyéthylène d'une épaisseur de 0,1 mm jusqu'à 0,3 mm.

21. Emballage pour matériau sensible à la lumière selon la revendication 3, caractérisé en ce que la rondelle d'étanchéité (8) est fabriquée à partir d'une feuille de polyéthylène et la zone en forme de disque et la zone en forme de moyeu du capuchon d'extrémité sont fabriquées à partir de papier ou de carton d'une épaisseur de 0,3 mm jusqu'à 0,5 mm.

22. Emballage pour matériau sensible à la lumière selon la revendication 3, caractérisé en ce que la rondelle d'étanchéité (8), la partie en forme de moyeu (7) et la feuille de recouvrement (3) sont composées d'un matériau de même composition et sont susceptibles d'être réutilisées.

23. Emballage pour matériau sensible à la lumière selon la revendication 2 ou 3, caractérisé en ce que chaque capuchon d'extrémité présente, dans une zone en forme de couronne, une perforation.

24. Emballage pour matériau sensible à la lumière selon la revendication 23, caractérisé en ce que les perforations s'étendent le long d'un cercle dont le diamètre est inférieur ou égal au diamètre extérieur de la rondelle d'étanchéité.

25. Procédé pour envelopper de façon étanche à la lumière une bobine de pellicule en matériau photographique qui est enroulé sur un tube de bobine et qui constitue un cylindre creux dont la surface d'enveloppe extérieure du cylindre et dont les surfaces frontales sont entourées de matériau étanche à la lumière de telle sorte que la largeur ainsi que le diamètre extérieur de la bobine de pellicule ne soient pas modifiés de façon sensible, caractérisé par les étapes suivantes consistant:
1) à relier une première extrémité d'une feuille de recouvrement étanche à la lumière, qui est plus large que la bande continue de pellicule et qui dépasse légèrement par rapport à la bobine de pellicule, à l'extrémité de la spire la plus extérieure du matériau sensible à la lumière;
2) à enrouler le matériau sensible à la lumière avec la feuille de recouvrement et à fixer de la deuxième extrémité de la feuille de recouvrement sur l'enveloppe extérieure du cylindre;
3) à appliquer deux capuchons d'extrémité, dont les zones en forme de moyeu sont enfichées des deux côtés à l'intérieur du tube de bobine pour y être maintenues par les forces de friction, et dont les parties en forme de disque débordent au-delà de la bobine de pellicule par leurs zones en forme de cercles qui constitue des sections en forme de languettes;
4) à replier les sections en forme de languettes, avec, pendant le repliement, l'application d'une façon croissante, à la périphérie de la surface d'enveloppe extérieure du cylindre et selon la direction de la bobine de pellicule, le long de lignes tangentielles parallèles à l'axe, d'une contrainte de poussée qui agit sur les sections en forme de languettes, de sorte que les surfaces d'extrémité viennent s'appuyer de façon rigide contre la rondelle d'étanchéité et que le bord extérieur de la rondelle d'étanchéité constitue, avec la partie de la feuille de recouvrement qui est en saillie par rapport à la bobine de pellicule, un labyrinthe étanche à la lumière afin que les capuchons d'extrémité, la feuille de recouvrement et le tube de bobine entourent de façon étanche à la lumière le matériau sensible à la lumière.
